## Europäisches Patentamt
## European Patent Office
## Office européen des brevets

(19)

(11) Veröffentlichungsnummer: **0 018 528**
**B1**

(12) **EUROPÄISCHE PATENTSCHRIFT**

(45) Veröffentlichungstag der Patentschrift: **22.06.83**

(51) Int. Cl.³: **B 29 C 1/04**

(21) Anmeldenummer: **80101974.6**

(22) Anmeldetag: **12.04.80**

(54) Trennmittel für Formen zur Herstellung von Kunststoff-Körpern auf Polyisocyanat-Basis.

(30) Priorität: **25.04.79 DE 2916700**

(43) Veröffentlichungstag der Anmeldung:
**12.11.80 Patentblatt 80/23**

(45) Bekanntmachung des Hinweises auf die Patenterteilung:
**22.06.83 Patentblatt 83/25**

(84) Benannte Vertragsstaaten:
**AT BE CH FR GB IT LI NL SE**

(56) Entgegenhaltungen:
DE - A - 1 131 873
DE - A - 1 653 178
DE - A - 2 057 554
DE - A - 2 449 014
DE - A - 2 637 919
FR - A - 1 297 225
FR - A - 1 386 674
US - A - 2 499 028
US - A - 3 595 734

(73) Patentinhaber: **METZELER KAUTSCHUK GMBH**
**Gneisenaustrasse 15**
**D-8000 München 50 (DE)**

(72) Erfinder: **Blahak, Johannes Dr.**
**Gautinger Strasse 3**
**D-8035 Gauting-Buchendorf (DE)**
Erfinder: **Menk, Hermann, Dr.**
**Prielweg 6**
**D-8990 Bodolz (DE)**

(74) Vertreter: **Michelis, Theodor, Dipl.-Ing.**
**Gneisenaustrasse 15**
**D-8000 München 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Trennmittel für Formen zur Herstellung von Kunststoff-Körpern auf Polyisocyanat- Basis

Die Erfindung betrifft ein Trennmittel für Formen zur Herstellung von Kunststoff-Körpern auf Polyisocyanat-Basis der im Oberbegriff des Anspruchs 1 angegebenen Gattung.

Kunststoffe werden aus geschlossenen oder offenen Formen unter Verwendung von Trennmitteln, beispielsweise Trennmitteln auf der Basis von Tetrafluoräthylen, Siliconen bzw. Wachsen, die oft in Lösungsmitteln gelöst sind, entformt. Diese Trennmittel haben jedoch den Nachteil, daß sie nach dem Entformen von dem Formkörper wieder entfernt werden müssen, da es andernfalls nicht möglich ist, die Kunststoffoberfläche des Formkörpers in der gewünschten Weise und mit der erforderlichen Haftfestigkeit zu lackieren. Dieser Vorgang der Entfernung des an der Kunststoffoberfläche haftenden Trennmittelfilms ist sehr aufwendig und unfaßt eine Dampfentfettung und Lösungsmittelnachbehandlung, die Veränderungen der Kunststoffoberfläche zur Folge haben, die wiederum Nachbehandlungen, wie z.B. ein Spachteln und Grundieren, notwendig machen, was insgesamt zu einer nicht unwesentlichen Verteuerung des Fertigteils führt. Andererseits bleibt durch die geringe Affinität der bisher verwendeten Trennmittel gegenüber dem Kunststoff, insbesondere Polyurethan- oder Polyharnstoff-Kunststoff, beim Entformen in der Form selbst jeweils ein Trennmittelfilm zurück, dessen Dicke bei der kontinuierlichen Produktion wächst und von Zeit zu Zeit, unter Unterbrechung des Produktionszyklus, entfernt werden muß. In arbeitshygienischer Hinsicht bedenklich ist auch die bei den bisher bekannten Trennmitteln erforderliche Verwendung von Lösungsmitteln, die darüber hinaus die Zykluszeit der Entformung verlängert, weil das Lösungsmittel nach dem Eintrennen verdampfen muß, so daß oft mit vielstelligen Rundläufern beim Produktionsprozeß gearbeitet werden muß.

Ein Trennmittel für Formen zue Herstellung von Kunststoff-Körpern auf Polyisocyanat-Basis der angegebenen Gattung ist aus der DE—B—1 131 873 bekannt; dieses Trennmittel weist einen auf die Oberfläche der Form aufgebrachten, mit dem Isocyanat reagierenden Film aus einer Substanz mit Hydroxyl- oder Amino-Endgruppen auf; dabei wird der Gedanke ausgenutzt, Substanzen einzusetzen. die sich mit Isocyanat-Gruppen leicht umsetzen, wie z.B. Wasser, Alkohole, Amine und Aminoalkohole.

Bei Formen aus Metallen mit praktisch nicht nachweisbaren Oxid-Schichten führt ein solches Trennmittel zu akzeptablen Ergebnissen; bestehen die Formen jedoch aus Metallen mit chemisch einwandfrei nachweisbarer Oxid-Schicht, wie es beispielsweise bei Aluminium-Formen der Fall ist, so treten insofern Schwierigkeiten auf, als die Haftung zwischen dem Elastomer-Körper und der Oxid-Schicht der Form zu stark und deshalb die einwandfreie Entformung nicht mehr möglich ist.

Der Erfindung liegt deshalb die Aufgabe zugrunde, ein Trennmittel der angegebenen Gattung zu schaffen, das auch bei Formen aus einem Metall mit chemisch nachweisbarer Oxid-Schicht, insbesondere Aluminium-Formen, eingesetzt werden kann.

Diese Aufgabe wird erfindungsgemäß durch die im kennzeichnenden Teil des Anspruchs 1 angegebenen Merkmale gelöst.

Zweckmäßige Ausführungsformen sind in den Unteransprüchen zusammengestellt.

Die mit der Erfindung erzielten Vorteile beruhen auf folgendem Grundgedanken: Bei dem bekannten Trennmittel nach der DE—B—1 131 873 wird eine Substanz verwendet, die sich mit Isocyanat-Gruppen leicht umsetzt, so daß sich eine sehr rasch ablaufende Reaktion zwischen dem Trennmittel-Film und den Isocyanat-Gruppen ergibt. Dadurch entstehen jedoch gleichzeitig sehr viele polare Bindungsgruppen, die eine gute Haftung zur Oberfläche von Metallen mit chemisch nachweisbarer Oxid-Schicht, wie beispielsweise Aluminium, vermitteln. Die in der DE—B—1 131 873 genannten Substanzen wurden in Verbindung mit Aluminium-Formen getestet; es konnte keine merkliche Trennwirkung nachgewiesen werden.

Das erfindungsgemäße Trennmittel weist jedoch eine bestimmte, keinesfalls jedoch zu hohe Konzentration an funktionellen Endgruppen auf, weil die entsprechenden Substanzen in einer relativ starken Verdünnung vorliegen, so daß sich wiederum eine erheblich geringere Konzentration an polaren Bindungsgruppen bilden kann und damit die Oberfläche des ausreagierten Formkörpers praktisch keine Haftung zur Oberfläche der Form aufweist; dies gilt auch bei Verwendung von Metallen mit chemisch nachweisbarer Oxid-Schicht, wie beispielsweise Aluminium.

Weiterhin läßt sich die Aktivität des Trennmittels entsprechend verschiedenen Isocyanat-Kunststoff-Ansätzen einstellen und damit unterschiedlichen Betriebsbedingungen anpassen.

Dieses Trennmittel kann durch einfaches Vermischen der erforderlichen Substanzen hergestellt und als dünner Film auf die Innenfläche der Form aufgesprüht, aufgestrichen oder in anderer Weise aufgetragen werden. Zweckmäßigerweise wird es in Form einer homogenen Lösung eingesetzt.

Es ist keine umständliche und kostspielige Nachbearbeitung der Oberfläche des ausgeformten Kunststoff-Körpers mehr erforderlich, d.h., der ausgeformte Kunststoff-Körper kann sofort jeder beliebigen Oberflächenbehandlung, insbesondere einer sofortigen Lackierung, unterzogen werden; dabei ist wesentlich, daß nach dem Ausformen des Kunststoff-Körpers auch auf der Oberfläche der Form praktisch kein Trennmittel mehr zurückbleibt, so daß auch hier keine aufwendige Reinigung der Form und Entfernung des Trennmittels mehr erforderlich ist.

Diese Trennfunktion beruht im wesentlichen auf dem folgenden Mechanismus: Aus dem Trennmittel-Film, der sich auf der Oberfläche der Form befindet, diffundieren die reaktiven Substanzen (Vernetzungsmittel), katalysiert oder unkatalysiert, in über ihre Konzentration gesteuerter Weise den reaktiven Bausteinen, vorzugsweise Polyisocyanaten, des auszuformenden Kunststoff-Körpers entgegen und verhindern durch chemische Reaktionen eine Reaktion der reaktiven Substanzen der Formoberfläche bzw. eine Adsorption der aktiven Reaktionsprodukte; gleichzeitig werden in definierter Weise reaktive Gruppen, nämlich Hydroxyl- oder Amino-Endgruppen, auf der Oberfläche des Kunststoff-Körpers angeordnet, wodurch über diese reaktiven Gruppen ohne vorherige Entfernung des Trennmittel-Films eine sofortige Lackierung des Kunststoff-Körpers möglich wird. Durch die Affinität zur Kunststoff-Matrix diffundiert der Trennmittel-Film selbst nach dem Entformen in den Kunststoff ein, er bleibt jedoch wegen seiner wenigreaktiven oder unreaktiven Endgruppen während des Aufschäum- und Aushärtungsvorganges erhalten.

Zur Verbesserung der Versprühbarkeit kann das Trennmittel in organischen oder anorganischen Lösungsmitteln eingesetzt werden.

Die Eignung des Trennmittels kann dadurch getestet werden, daß durch Einsprühen ein mit Isocyanaten wenigreaktiver Film auf der Formoberfläche erzeugt wird. Ist die Filmbildung nur partiell, so kann sie durch Zugabe von Tensiden zur Herabsetzung der Oberflächenspannung vervollständigt werden.

Zweckmäßigerweise wird zur Herstellung des Trennmittel-Films ein wenigreaktives Polyol verwendet, das eine Affinität zu dem in dem Kunststoff-Körper enthaltenen Polyol oder Polyamin aufweist, um das Eindiffundieren des Trennmittel-Films in den auszuformenden Elastomer-Körper chemisch zu erleichtern.

Ein Weiterer Vorteil dieses Trennmittels liegt darin, daß es nun möglich ist, über die Konzentration der Vernetzungsmittel und/oder Katalysatoren in dem Trennmittel-Film die Oberfläche des Kunststoff-Körpers definitiv und stöchiometrisch anzufunktionalisieren. Auf diese Weise erhält man Oberflächen mit funktionellen Endgruppen in der gewünschten Konzentration. Da der Trennmittel-Film bei entsprechender affiner Wahl in den Kunststoff-Körper eindiffundiert bleibt, ist es als Folge der an der Oberfläche entstehenden OH—bzw. $NH_2$-Gruppen möglich, ohne weitere Vorbehandlung direkt eine Lackierung, vorzugsweise unter Verwendung von DD-Lacken®, mit hervorragender Lackhaftung durchzuführen, ohne daß vorher das Trennmittel entfernt werden muß.

Besonders gute Ergebnisse werden erzielt bei Verwendung von Polypropylenglykol, M 2000, F = 2, (Funktionalität F), bei Verwendung von Polypropylenglykol, M 4000, im Gemisch mit 5 Gew.-% 1,12-Diaminododecan oder bei Verwendung von Polypropylenglykol, M 2000, F = 2, das mit 2 Mol Phenylisocyanat umgesetzt worden ist, im Gemisch mit 5 Gew.-% Butandiol-1,4 und Dibutylzinndilaurat.

Die Erfindung wird durch die folgenden Beispiele näher erläutert.

Beispiel 1

Auf eine Aluminiumform wurde ein Trennmittelfilm aufgebracht, der hergestellt wurde aus einem Gemisch aus 100 Gew.- Teilen Polypropylenoxiddiol mit einem mittleren Molekulargewicht von 2.000, 5 Gew.-Teilen Butan-diol-1,4 und 0,25 Gew.-Teilen Dibutylzinndilaurat. Auf den Trennmittelfilm wurde ein Polyurethanschaumsystem der Firma Bayer AG (PU 1777 HT/Desmodur PF—100 T:52 T) gegossen. Der dabei erhaltene Formkörper ließ sich nach Beendigung der Formgebung leicht entformen und direkt lackieren, wobei der aufgebrachte Lacküberzug fest daran haftete.

Vergleichsbeispiel A

Zum Vergleich wurde der gleiche Vorgang ohne Verwendung eines Formtrennmittels durchgeführt. Das Ergebnis war, daß der Formkörper irreversibel an der Aluminiumform haftete.

Vergleichsbeispiel B

Bei Verwendung des bekannten Formtrennmittels Akmosil-180 ST® bzw. Baysilan Trennmittel V® ließ sich der Formkörper ebenso leicht entformen wie bei Verwendung des erfindungsgemäßen Trennmittels. Bevor dieser Formkörper jedoch dauerhaft lackiert werden konnte, mußte in mehreren Arbeitsgängen der an der Oberfläche des Formkörpers haftende Trennmittelfilm entfernt werden.

Beispiel 2

Es wird vorgegangen, wie in Beispiel 1 beschrieben, als Vernetzer im Trennsystem jedoch mit 5 Gew.-Teilen 1,6-Hexamethylen-diamin gearbeitet. Die Effekte sind dieselben.

Beispiel 3

Es wird vorgegangen, wie in Beispiel 1 beschrieben, als Vernetzer und Trennsystem jedoch mit 15 Gew.-Teilen 1,12-Duodekamethylendiamin gearbeitet. Wieder ist eine gute Trennwirkung bei gleichzeitiger guter Direktlackierung des Formlings gegeben.

Beispiel 4

Es wird wie in Beispiel 1 vorgegangen, als Vernetzer im Trennsystem jedoch mit 5 Gew.-Teilen 4 - Methyl - 3,5 - diaminobenzoesäure - 2 - äthylvinylester und als Katalysator mit 0,25 Gew.-Teilen Phosphorsäuredibutylester gearbeitet. Trennung und Lackierbarkeit sind hervorragend.

### Beispiel 5

Es wird vorgegangen, wie in Beispiel 4 beschrieben, als Vernetzer im Trennsystem jedoch mit 10 Gew.-Teilen Bisäthyl- - 2,4 - Toluylendiamin gearbeitet. Trennwirkung und Lackierbarkeit sind ausgezeichnet.

### Beispiel 6

Die Form wird mit einem Addukt aus 1 Mol Polypropylenoxiddiol (M = 2000) und 2 Mol Stearyl-isocyanat eingetrennt. Auf 100 Gew.-Teile des so hergestellten Zerols wurden 5 Gew.-Teile Bisäthyl-2,4-Toluylendiamin eingesetzt. Als PU-System wird das in Beispiel 1 beschriebene verwendet. Trennwirkung und Lackierbarkeit sind sehr gut.

### Beispiel 7

Es wird vorgegangen wie in Beispiel 6 beschrieben, das Trennsystem jedoch mit 0,5 Gew.-Teilen Phosphorsäuredibutylester versetzt. Die Trennwirkung und Direkt-Lackierbarkeit, kenntlich an der leichten Entformbarkeit aus einer auf 50°C temperierten Schließform bzw. an der guten Lackhaftung eines DD-Lackes® bei starker Krümmung des Formlings und im Trommeldrehtest ist hervorragend.

### Patentansprüche

1. Trennmittel für Formen zur Herstellung von Kunststoff-Körpern auf Polyisocyanat-Basis mit einem auf die Oberfläche der Form aufgebrachten, mit dem Isocyanat reagierenden Film aus einer Substanz mit Hydroxyl-oder Amino-Gruppen als funktionelle Gruppen, dadurch gekennzeichnet, daß der Film einen Polyäther oder Polyester im Molekulargewichtsbereich von 800 bis 5000 enthält, der entweder infunktionell ist (Zerol) oder nur wenig reaktiv ist, der also nur wenige funtionelle Gruppen, insbesondere sekundäre Hydroxyl- oder sterisch gehinderte Aminogruppen pro Molekül aufweist, und der Film darüberhinaus 5 bis 50 Gewichts-%, bezogen auf den Polyäther oder Polyester, eines als Vernetzer wirkenden Polyols, Polyamins und/oder eines Aminoalkohols enthält.

2. Trennmittel nach Anspruch 1, dadurch gekennzeichnet, daß es ein mit Phenylisocyanat umgesetztes Polypropylenglykol mit einem Molekulargewicht von 2000 enthält.

3. Trennmittel nach Anspruch 1, dadurch gekennzeichnet, daß es aus Polypropylenglykol mit einem Molekulargewicht von 4000 im Gemisch mit 5 Gewichts-% 1,12 Diaminododecan besteht.

4. Trennmittel nach Anspruch 1, dadurch gekennzeichnet, daß es aus mit Phenylisocyanat umgesetztem Polypropylenglykol mit einem Molekulargewicht von 3600 im Gemisch mit 5 Gewichts-% Butan-1,4-diol und Dibutylzinndilaurat besteht.

5. Trennmittel nach mindestens einem der Ansprüche 1 bis 4, dadurch gekennzeichnet, daß es mindestens ein organisches und/oder anorganisches Lösungsmittel aus der Gruppe der chlorierten Kohlenwasserstoffe, Carbonsäureester und Ketone, gegebenenfalls im Gemisch mit Wasser, enthält.

### Claims

1. A mould release agent for moulds for the production of plastics bodies based on polyisocyanate comprising a film which is applied to the surface of the mould, which reacts with the isocyanate and consists of a substance containing hydroxyl or amino groups as functional groups, characterised in that the film contains a polyether or polyester in the molecular weight range of from 800 to 5,000 which is either non-functional (Zerol) or is only slightly reactive and thus contains only a few functional groups, in particular secondary hydroxyl or sterically hindered amino groups per molecule and, moreover, the film contains from 5 to 50% by weight, based on the polyether or polyester, of a polyol, polyamine and/or an amino alcohol acting as a cross-linker.

2. A mould release agent according to claim 1, characterised in that it contains a polypropylene glycol having a molecular weight of 2,000 which is reacted with phenylisocyanate.

3. A mould release agent according to claim 1, characterised in that it consists of polypropylene glycol having a molecular weight of 4,000 in admixture with 5% by weight of 1,12-diaminododecane.

4. A mould release agent according to claim 1, characterised in that it consists of polypropylene glycol having a molecular weight of 3600, reacted with phenylisocyanate, in admixture with 5% by weight of butane-1,4-diol and dibutyl tin dilaurate.

5. A mould release agent according to at least one of claims 1 to 4, characterised in that it contains at least one organic and/or inorganic solvent from the group of chlorinated hydrocarbons, carboxylic acid esters and ketones, optionally in admixture with water.

### Revendications

1. Agent de démoulage pour des moules de fabrication de corps en matière plastique à base de polyisocyanate ayant une pellicule en une substance, ayant comme groupes fonctionnels des groupes hydroxy ou amino, appliquée sur la surface du moule et réagissant sur l'isocyanate, caractérisé en ce que la pellicule contient un polyéther ou un polyester dans la gamme de masse moléculaire de 800 à 5000, qui n'est pas fonctionnelle (zérol) ou qui n'est que peu réactif et qui ne présente donc par molécule que peu de groupes fonctionnels, notamment de groupes hydroxy secondaires ou de groupes amino à empêchement stérique, et la pellicule contient, en outre, de 5 à 50 parties en poids rapportées au polyéther ou au polyester d'un polyol, d'une polyamine et/ou d'un aminoalcool agissant comme agent de réticulation.

2. Agent de démoulage selon la revendication 1, caractérisé en ce qu'il contient un polypropylène glycol ayant réagi sur l'isocyanate de phényle et ayant une masse moléculaire de 2000.

3. Agent de démoulage selon la revendication 1, caractérisé en ce qu'il est constitué de polypropylène glycol ayant une masse moléculaire de 4000 en mélange avec 5% en poids de 1,12-diaminododécane.

4. Agent de démoulage selon la revendication 1, caractérisé en ce qu'il est constitué de polypropylène glycol ayant réagi sur de l'isocyanate de phényle et ayant une masse moléculaire de 3600 en mélange avec 5% en poids de butane-1,4-diol et de dilaurate d'étain d'éthyle.

5. Agent de démoulage suivant au moins l'une des revendications 1 à 4, caractérisé en ce qu'il contient au moins un solvant organique et/ou minéral du groupe des hydrocarbures chlorés, des esters d'acides carboxyliques et des cétones, le cas échéant, en mélange à de l'eau.